Europäisches Patentamt

European Patent Office

Office européen des brevets

(11) Numéro de publication : **0 406 077 B1**

(19)

(12) **FASCICULE DE BREVET EUROPEEN**

(45) Date de publication du fascicule du brevet :
**30.03.94 Bulletin 94/13**

(21) Numéro de dépôt : **90401783.7**

(22) Date de dépôt : **22.06.90**

(51) Int. Cl.⁵ : **H04L 12/56**

(54) **Système complémentaire de communication en mode sans-connexion pour réseau temporel asynchrone.**

(30) Priorité : **30.06.89 FR 8908762**

(43) Date de publication de la demande :
**02.01.91 Bulletin 91/01**

(45) Mention de la délivrance du brevet :
**30.03.94 Bulletin 94/13**

(84) Etats contractants désignés :
**BE DE GB**

(56) Documents cités :
**EP-A- 0 300 606**
**US-A- 4 486 877**
**IEE PROCEEDINGS SECTION A a I, vol. 131, no. 2, partie E, mars 1984, pages 38-44, Old Woking, GB; R. HULL et al.: "Virtual resource ring: Technique for decentralised resource management in fault-tolerant distributed computer systems"**

(56) Documents cités :
**BRITISH TELECOMMUNICATIONS ENGINEE-RING, vol. 6, no. 2, juillet 1987, pages 95-104, Londres, GB; M. LITTLEWOOD et al.: "Network evolution using asynchronous time-division techniques"**
**INTERNATIONAL SWITCHING SYMPOSIUM 1987, Phoenix, 15-20 mars 1987, pages 462-469, IEEE, Phoenix, Arizona, US; M.Wm. BECKNER et al.: "A protocol and prototype for broadband subscriber access to ISDN's"**

(73) Titulaire : **FRANCE TELECOM**
**6, Place d'Alleray**
**F-75015 Paris (FR)**

(72) Inventeur : **Lespagnol, Albert**
**38-40 rue du Général Leclerc**
**F-2131 Issy Les Moulineaux (FR)**
Inventeur : **Quinquis, Jean-Paul**
**38-40 rue du Général Leclerc**
**F-2131 Issy Les Moulineaux (FR)**
Inventeur : **Servel, Michel**
**38-40 rue du Général Leclerc**
**F-2131 Issy Les Moulineaux (FR)**

(74) Mandataire : **Cabinet Martinet & Lapoux**
**BP 405**
**F-78055 Saint Quentin en Yvelines Cédex (FR)**

EP 0 406 077 B1

# Description

La présente invention est du domaine de la commutation temporelle asynchrone. Plus précisément, l'invention concerne des systèmes de communication associés à des réseaux temporels asynchrones et autorisant des communications en mode sans-connexion entre les terminaux.

Les réseaux temporels asynchrones sont conçus pour fournir des communications en mode avec-connexion, c'est-à-dire qu'une liaison avec réservation de ressources doit nécessairement être établie entre les terminaux avant chaque transmission d'informations. Les réseaux locaux d'entreprise (LAN - Local Area Network en terminologie anglo-saxonne) fournissent des services de type sans-connexion et un terminal peut émettre à tout moment des informations vers un autre terminal en précisant uniquement l'adresse du terminal destinataire et sans qu'il soit nécessaire d'établir préalablement une liaison. Un service sans-connexion est essentiel pour des applications de transmission de données pour lesquelles a priori ne sont pas connus :

- avec quels autres terminaux le terminal demandeur va ensuite échanger des informations ;
- quel volume d'information va transmettre ledit terminal demandeur, pendant combien de temps et à quel débit ; et
- les moments auxquels le terminal demandeur va transmettre.

En effet, une telle imprévisibilité au niveau des paramètres d'une communication rend le service avec-connexion peu rentable. Le taux d'occupation de la liaison n'est pas connu et la durée d'établissement de la liaison lorsqu'une requête de transmission intervient risque d'être disproportionnée par rapport à la durée de transmission de l'information.

La technique temporelle asynchrone est considérée généralement comme une très bonne solution technique de commutation de par sa rapidité, et son utilisation est envisagée pour la constitution des futurs réseaux numériques à intégration de services à large bande (RNIS-LB). Compte-tenu des qualités et atouts que présente cette technique, il est souhaitable qu'elle puisse répondre aux différents besoins de communication. Un réseau temporel asynchrone doit pouvoir répondre aux demandes de services sans-connexion ne serait-ce que pour être utilisable également dans le domaine privé des réseaux locaux d'entreprise.

La présente invention vise à fournir des systèmes complémentaires de communication conçus pour équiper des réseaux temporels asynchrones et leur apporter des fonctionnalités de type sans-connexion.

A cette fin, un système de communication selon l'invention pour équiper un réseau temporel asynchrone et permettre à des terminaux de communiquer en mode sans-connexion à travers ledit réseau est caractérisé en ce que le système comprend des moyens pour gérer l'établissement et l'exploitation d'un anneau virtuel de communication auquel sont connectés les terminaux susceptibles de communiquer entre eux en mode sans-connexion et à travers lequel sont transmises des premières cellules de données contenant des blocs d'information à transmettre, lesdits moyens pour gérer incluant des moyens reliés à travers le réseau à chacun des terminaux pour contrôler des demandes de connexion/déconnexion émanant des terminaux afin de fournir aux terminaux connectés à l'anneau des informations relatives à l'acheminement des cellules, et des moyens répartis dans les terminaux et interfaçant les terminaux à l'anneau virtuel pour gérer la production, la réception et la transmission des premières cellules de données.

De préférence, les moyens répartis dans les terminaux comprennent dans chacun desdits terminaux des moyens de démultiplexage et multiplexage pour séparer les premières cellules de données de l'anneau virtuel et des secondes cellules de données n'appartenant pas à l'anneau virtuel et convoyées par des mêmes multiplex temporels asynchrones du réseau, des moyens pour détecter et recevoir les premières cellules de données destinées au terminal, des moyens pour lire et mémoriser par ordre chronologique d'arrivée des blocs d'information et des adresses de source lus dans les premières cellules de données reçues, des moyens pour retransmettre dans l'anneau virtuel les premières cellules de données pleines destinées à d'autres terminaux, et des moyens pour inclure des blocs d'information à transmettre et des adresses dans des premières cellules de données vides afin de transmettre des premières cellules avec lesdits blocs et adresses dans l'anneau virtuel.

L'invention sera mieux comprise à la lecture de la description suivante de plusieurs réalisations préférées du système de communication selon l'invention en référence aux dessins annexés correspondants dans lesquels :

- la Fig. 1 montre schématiquement l'architecture d'un réseau temporel asynchrone équipé d'un système de communication selon l'invention ;
- la Fig. 2 montre la structure de cellules de données convoyées dans un anneau virtuel du système de communication selon l'invention ;
- la Fig. 3 montre le découpage d'une trame d'information à transmettre en plusieurs blocs d'information et l'insertion des différents blocs dans les cellules de l'anneau ;
- la Fig. 4 est un bloc-diagramme d'un circuit d'adaptation d'anneau inclus dans chacun des terminaux connectés au réseau ;
- la Fig. 5 est un bloc-diagramme d'un circuit de pilote d'anneau inclus dans l'un des terminaux connectés au réseau ;
- la Fig. 6 est un chronogramme montrant l'insertion d'une cellule vide dans l'anneau virtuel du système de communication ; et
- la Fig. 7 est une table de vérité relative au fonctionnement du circuit pilote d'anneau.

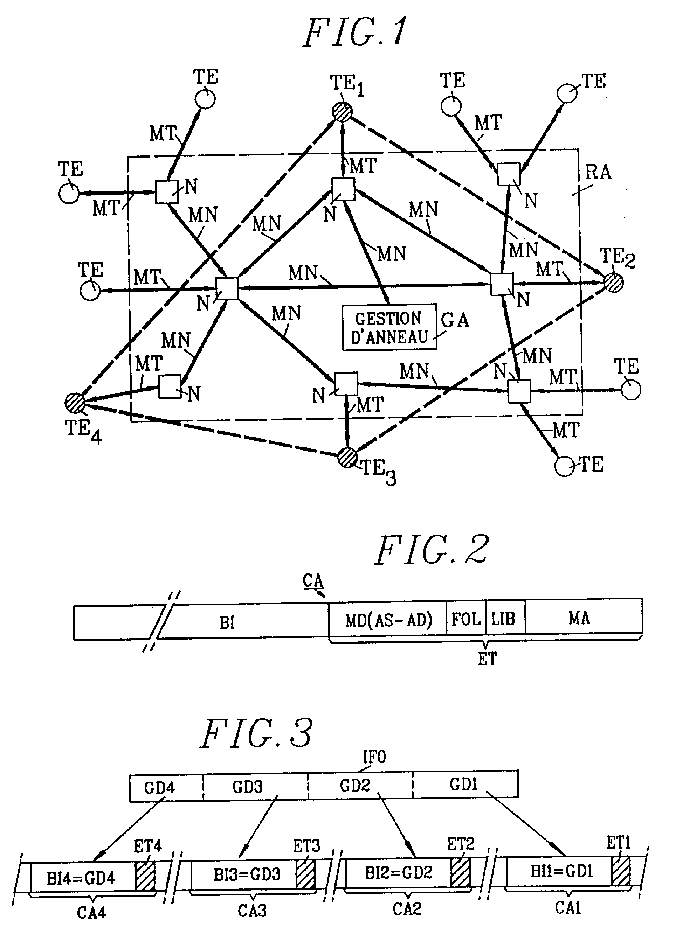

En référence à la Fig. 1, un système de communication en mode sans-connexion et en anneau virtuel selon l'invention est implanté dans un réseau temporel asynchrone RA. Une pluralité de terminaux TE sont raccordés à des noeuds de commutation N. Des multiplex temporels asynchrones bidirectionnels MN relient entre eux les noeuds N et forment un réseau de structure quelconque. D'autres multiplex temporels asynchrones bidirectionnels MT relient les terminaux TE aux noeuds N. A l'instant considéré à la Fig. 1, quatre terminaux $TE_1$ à $TE_4$ sont reliés à travers l'anneau virtuel. La transmission des données dans l'anneau virtuel est unidirectionnelle. L'acheminement des données à travers l'anneau virtuel est montré à la Fig. 1 par des flèches en traits interrompus. Un équipement de gestion d'anneau GA est prévu dans le réseau RA afin d'administrer l'anneau virtuel. L'équipement GA est connecté à un noeud du réseau et est intégré audit réseau. Selon une variante, l'équipement GA est extérieur au réseau RA à proprement parler et se présente sous la forme d'un terminal TE dédié à la fonction d'administration de l'anneau virtuel.

Outre des cellules de données relatives à des liaisons avec-connexion, un multiplex MT raccordant un terminal $TE_n$ de l'anneau virtuel transporte selon chaque sens de transmission des cellules de données CA de longueur fixe à un débit prédéterminé. Les cellules de données CA appartiennent à l'anneau virtuel et sont relatives aux liaisons sans-connexion.

La structure d'une cellule CA est montrée à la Fig. 2. Une cellule CA est composée d'une étiquette ET et d'un bloc d'information BI.

L'étiquette ET comprend un mot d'acheminement MA, un mot de discrimination MD, et deux bits de signalisation LIB et FOL.

Le mot d'acheminement MA permet l'acheminement des cellules à travers le réseau RA. De manière générale, une cellule CA reçue par un terminal $TE_n$ de l'anneau et incluant un mot d'acheminement $MA_n$ est retransmise par celui-ci avec un autre mot d'acheminement $MA_{n+1} \neq MA_n$ vers le terminal suivant $TE_{n+1}$ de l'anneau virtuel. L'équipement de gestion d'anneau GA, à chaque modification de l'anneau virtuel par connexion ou déconnexion d'un ou plusieurs terminaux $TE_n$ dans l'anneau, commande le chargement de nouvelles tables d'acheminement dans les différents noeuds N du réseau RA et communique aux terminaux de l'anneau virtuel les mots d'acheminement MA correspondants.

Le mot de discrimination MD contient une adresse de source AS et une adresse de destination AD correspondant respectivement à une adresse du terminal TE ayant inclus des données dans le bloc BI de la cellule et à une adresse du terminal TE destinataire desdites données.

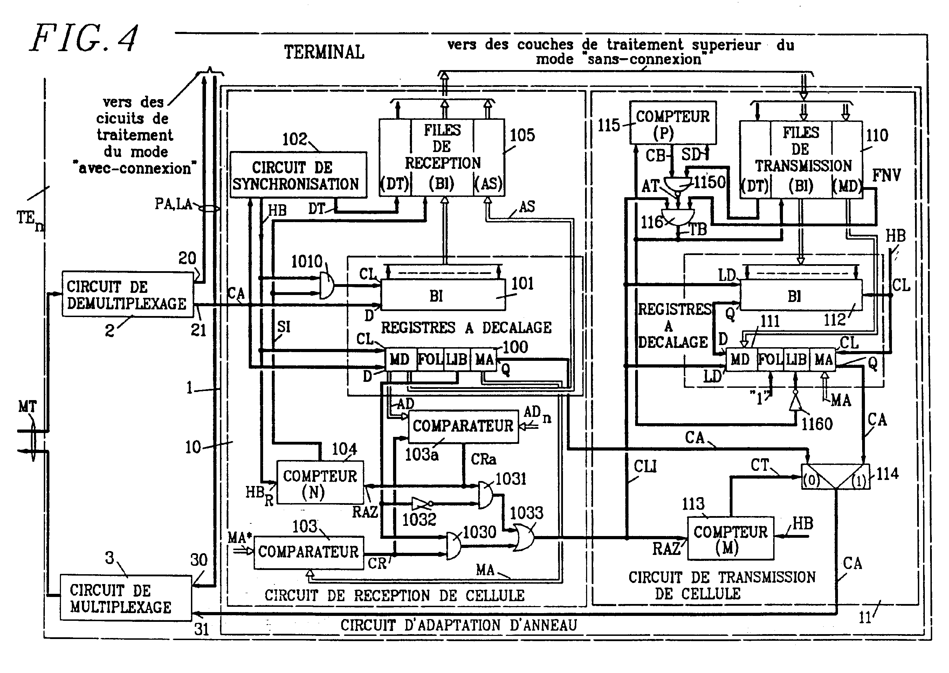

En référence à la Fig. 3, une trame d'information IFO transmise par un terminal $TE_n$ en mode sans-connexion vers un autre terminal $TE_m$ de l'anneau est de longueur quelconque et est découpée en plusieurs groupes de données par exemple GD1 à GD4, lesquels sont inclus respectivement dans des blocs d'information BI1 à BI4 respectivement de cellules CA1 à CA4 transmises successivement par le terminal $TE_n$.

Le bit LIB à l'état "1" indique que la cellule cA est libre et peut recevoir un bloc d'information BI. Le bit LIB à l'état "0" indique que la cellule CA est occupée et convoie un bloc d'information BI valide.

Le bit FOL est mis à l'état "1" par le terminal sur ce $TE_n$ ayant déposé un groupe de données GD dans la cellule CA. Un terminal $TE_p$ a un rôle particulier qui est de réguler le débit dans l'anneau virtuel et de contrôler les cellules convoyées dans l'anneau. Le terminal $TE_p$ est appelé "terminal pilote" par la suite. Le terminal pilote $TE_p$ positionne systématiquement à l'état "0" les bits FOL de toutes les cellules pleines CA (LIB="0") qu'il reçoit avant de les retransmettre dans l'anneau virtuel. Lorsque le terminal pilote TE reçoit une cellule pleine CA avec le bit FOL="0", il en déduit que le mot de discrimination MD est erroné puisque ladite cellule CA a effectué un tour de l'anneau et au maximum deux tours et qu'aucun des terminaux $TE_n$ n'a reconnu la cellule comme lui étant destinée, et consécutivement le terminal pilote $TE_p$ élimine la cellule CA en ne la retransmettant pas dans l'anneau virtuel.

En référence à la Fig. 4, chacun des terminaux $TE_n$ est équipé d'un circuit d'adaptation d'anneau 1 qui est maintenant décrit. Le circuit d'adaptation d'anneau 1 comprend un circuit de réception de cellule 10 et un circuit de transmission de cellule 11.

Dans le terminal $TE_n$, des multiplex entrant et sortant du multiplex bidirectionnel MT sont reliés respectivement à un circuit de démultiplexage 2 et à un circuit de multiplexage 3. Les circuits de démultiplexage 2 et de multiplexage 3 ont essentiellement pour fonction de séparer des première et seconde voies correspondant respectivement aux cellules de données cA appartenant à l'anneau virtuel et à d'autres cellules de données PA n'appartenant pas à l'anneau virtuel. Des premières sortie et entrée, 20 et 30, respectivement des circuits 2 et 3 sont reliées à une liaison bidirectionnelle LA convoyant des cellules PA vers des circuits de traitement correspondants du terminal $TE_n$. Des secondes sortie et entrée, 21 et 31, des circuits 2 et 3 sont reliées respectivement aux circuits de réception de cellule 10 et de transmission de cellule 11.

Le circuit de réception de cellule 10 comprend essentiellement des registres à décalage d'entrée 100 et 101, un circuit de synchronisation 102, des comparateurs de mots 103 et 103a, un compteur 104, et des files de réception 105.

Les cellules CA sont délivrées sous forme série par le circuit de démultiplexage 2 et sont appliquées à des entrées de données série D des registres à décalage 100 et 101 et à une entrée correspondante du circuit de synchronisation 102.

Le circuit de synchronisation 102 reçoit les cellules CA et délivre en sortie un signal d'horloge de rythme de bit HB et un signal de début de trame DT pour signaler à l'état "1" la réception d'une première cellule CA1 (Fig. 3) convoyant un premier groupe de données GD1 (Fig. 3) d'une trame d'information IFO transmise à travers l'anneau.

Le signal d'horloge HB est appliqué directement à une entrée d'horloge CL du registre à décalage 100 et, à travers une porte ET, 1010, à une autre entrée d'horloge CL du registre à décalage 101.

Les bits des cellules CA sont chargés successivement et de manière continue dans le registre à décalage 100. Le registre 100 comprend quatre champs correspondant respectivement au mot d'acheminement MA, au bit de signalisation LIB, au bit de signalisation FOL, et au mot de discrimination MD.

Le comparateur 103 a pour fonction de détecter le chargement dans le registre 100 d'une étiquette ET afin de signaler la réception d'une cellule de données CA. Le comparateur 103 reçoit à des premières entrées une portion de mot d'acheminement MA* commune à tous les mots d'acheminement MA inclus dans les cellules CA. Des secondes entrées du comparateur 103 sont reliées à des sorties parallèles du registre 100 correspondant au champ du mot MA. Une impulsion CR="1" est fournie en sortie par le comparateur 103 lorsqu'une cellule CA est détectée. L'impulsion CR est appliquée à une première entrée d'une porte ET, 1030, et à une entrée d'activation du comparateur 103a.

Le comparateur 103a est activé par l'impulsion CR="1" fournie par le comparateur 103. Le comparateur 103a détecte dans le registre 100 les mots de discrimination MD contenant une adresse de destination AD identique à une adresse $AD_n$ correspondant au terminal $TE_n$. Lorsqu'une adresse $AD=AD_n$ est détectée dans le champ du mot MD correspondant du registre 100, une cellule CA destinée au terminal $TE_n$ est en cours de réception et le comparateur 103a délivre une impulsion CRa="1". L'impulsion CRa est appliquée à une entrée d'initialisation RAZ du compteur 104 et à une première entrée d'une porte ET, 1031.

Le compteur 104 est un compteur binaire modulo N, où N est la longueur en nombre de bits du bloc d'information BI d'une cellule CA. Le contenu du compteur 104 est incrémenté cycliquement par le signal d'horloge HB. Le compteur 104 se bloque lorsque son contenu atteint la valeur M et il est débloqué et remis à zéro par l'impulsion CRa="1". Un signal SI est délivré par le compteur 104. Le signal SI est à l'état "0" et à l'état "1" respectivement lorsque le compteur 104 est bloqué et lorsqu'il est débloqué.

Lorsqu'une cellule CA destinée au terminal $TE_n$ est en cours de réception, l'impulsion $CR_a$="1" débloque le compteur 104 et le signal SI vient à l'état "1". Le signal SI="1" ouvre la porte ET, 1010, et le signal d'horloge HB est appliqué à l'entrée CL du registre 101. Consécutivement, le bloc d'information BI de la cellule CA en cours de réception est chargé bit par bit dans le registre 101. Lorsque le signal SI commute à l'état "0", la totalité du bloc d'information BI de la cellule CA est chargée dans le registre 101. Le front descendant, de "1" à "0", du signal SI commande dans les files de réception 105 le chargement de l'état du signal de début de trame DT qui est fourni par le circuit de synchronisation 102, du bloc d'information BI qui est fourni par des sorties parallèles correspondantes du registre 101, et de l'adresse de source AS qui est contenue dans le mot de discrimination MD et fournie par des sorties parallèles correspondantes du registre 100. Les files de réception 105 sont de type FIFO et mémorisent les informations DT, BI et AS par ordre chronologique d'arrivée des cellules CA. Les informations stockées dans les files de réception 105 sont ensuite transférées vers des couches de traitement supérieures du terminal $TE_n$.

Un inverseur logique 1032 et une porte OU 1033 sont également prévus dans le circuit de réception de cellule 10 et sont associés aux portes ET, 1030 et 1031 afin de produire un signal CLI destiné au circuit de transmission de cellule 11. Le signal CLI à l'état "1" indique au circuit de transmission 11 qu'une cellule libre CA est disponible et prête à recevoir un bloc d'information BI à transmettre dans l'anneau virtuel. Le signal CLI est produit dans le circuit de réception 10 en fonction des signaux CR, CRa et LIB et est à l'état "1" lorsqu'une cellule libre CA est reçue dans le circuit 10 ou lorsqu'une cellule pleine CA destinée au terminal $TE_n$ est reçue et devient libre après le transfert du bloc d'information BI qu'elle contient vers les files de réception 105. Le signal LIB est appliqué directement à une seconde entrée de la porte ET, 1030 et à travers l'inverseur 1032, à une seconde entrée de la porte ET, 1031. Des sorties des portes ET, 1030, et 1031 sont reliées respectivement à des première et seconde entrées de la porte OU, 1033. La porte OU, 1033 fournit le signal CLI.

Le circuit de transmission de cellule 11 comprend essentiellement des files de transmission 110, des registres à décalage de sortie 111 et 112, un premier compteur 113, un multiplexeur 114, et un second compteur 115.

Les informations DT, BI et MD transmises par les couches de traitement supérieures du terminal $TE_n$ sont stockées dans les files de transmission 110. Outre les informations DT, BI et MD, les files 110 délivrent un signal FNV indiquant à l'état "1" que les files 110 ne sont pas vides, et dans l'état complémentaire FMV = "O" que les files 110 sont vides.

Le registre 111 comprênd quatre champs correspondant respectivement au mot d'acheminement MA, au bit de signalisation FOL, au bit de signalisation LIB, et au mot de discrimination MD. Le registre 112 comprend un unique champ destiné à recevoir un bloc d'information BI. Les deux registres 111 et 112 sont connectés en série. Une sortie de données série Q du registre 112 est reliée à une entrée de données série D du registre 111. Un signal d'horloge de rythme de bit HB est appliqué à des entrées d'horloge CL des registres 111 et 112. Les informations MD et BI fournies par les files de transmission 110 sont appliquées à des entrées parallèles correspondantes respectivement des registres 111 et 112. Le mot d'acheminement MA est appliqué à des entrées parallèles correspondantes du registre 111. Une entrée parallèle du registre 111 correspondant au champ du bit FOL est placée à l'état "1". Une autre entrée parallèle du registre 111 correspondant au champ du bit LIB est reliée à une sortie d'une porte ET, 116, à travers un inverseur logique 1160, et reçoit une impulsion TB.

Le compteur 113 est un compteur binaire modulo M, où M est la longueur en nombre de bits d'une cellule CA. Le contenu du compteur 113 est incrémenté cycliquement par le signal d'horloge HB. Le compteur 113 se bloque lorsque son contenu atteint la valeur M et il est débloqué et remis à zéro par l'impulsion CLI="1" transmise par le circuit de réception de cellule 10 lorsqu'une cellule vide CA est disponible. Un signal CT est délivré par le compteur 113 et est appliqué à une entrée de commande du multiplexeur 114. Le signal CT est à l'état "0" et à l'état "1" respectivement lorsque le compteur 113 est bloqué et lorsqu'il est débloqué.

Lorsque l'impulsion CLI n'est pas active et est donc à l'état "0", la sortie 21 du circuit de démultiplexage 2 doit être bouclée sur l'entrée 31 du circuit de multiplexage 3 de manière à retransmettre les cellules pleines CA reçues par le circuit de réception 10 vers le multiplex asynchrone MT. Dans le cas de figure ci-dessus, le compteur 113 reste bloqué et le signal CT à l'état "0" sélectionne une première entrée du multiplexeur 114 reliée à une sortie de données Q du registre 100 dans le circuit de réception 10. Une sortie du multiplexeur 114 est reliée à l'entrée 31 du circuit de multiplexage 3 et les cellules pleines CA sont transmises de la sortie 21 du circuit 2 vers l'entrée 31 du circuit 3 à travers le registre 100 et le multiplexeur 114.

Lorsque l'impulsion CLI vient à l'état "1", c'est-à-dire lorsqu'une cellule libre CA est disponible, le compteur 113 est débloqué et est remis à zéro et le signal CT commute à l'état "1" pour une durée correspondant à la transmission d'une cellule CA. Le signal CT="1" sélectionne une seconde entrée du multiplexeur 114, entrée qui est connectée à une sortie de données série Q du registre 111. Suivant le cas, une cellule vide CA ou une cellule CA contenant un bloc d'information BI en provenance des files 110 est transmise vers l'entrée 31 du circuit 3 par les registres 111 et 112.

L'impulsion CLI est appliquée à des entrées de commande de chargement LD des registres 111 et 112 et à une première entrée de la porte ET, 116. Des seconde et troisième entrées de la porte ET, 116 reçoivent respectivement un signal AT et le signal FNV fourni par les files de transmission 110. Une sortie de la porte ET, 116 délivre l'impulsion TB qui est appliquée à une entrée parallèle du registre 111 à travers l'inverseur 1160. L'impulsion TB est également appliquée à une entrée de commande des files de transmission 110 et commande par un état "1" la transmission des informations BI et MD vers les entrées parallèles correspondantes des registres 111 et 112.

Lorsque la porte ET, 116 est fermée par l'un des signaux AT ou FNV à l'état "0", l'impulsion CLI ne traverse pas la porte ET, 116 et consécutivement l'impulsion TB="1" n'est pas produite. Les informations BI et MD restent donc dans les files 110 et ne sont pas chargées dans les registres 111 et 112 et l'impulsion CLI commande dans le registre 111 le chargement d'un bit FOL="1", d'un bit LIB=$\overline{TB}$="1" et du mot d'acheminement MA et une cellule vide CA est transmise vers le multiplex MT.

Lorsque la porte ET, 116 est ouverte, AT.FNV="1", l'impulsion TB="1" commande le chargement du bit LIB=$\overline{TB}$="0" et des informations BI et MD dans les registres 111 et 112. Une cellule pleine CA est alors transmise vers le multiplex MT.

Le signal AT est produit par des moyens sous la forme du compteur 115 et d'une porte NON-ET, 1150 pour réguler le débit de transmission du terminal.

Le compteur 115 est un compteur binaire. Le compteur 115 est incrémenté par les impulsions TB="1" qui sont appliquées à son entrée d'horloge. Lorsqu'une valeur maximale P est atteinte dans le compteur 115, celui-ci se bloque et délivre un signal CB à l'état "1". Le compteur 115 est initialisé périodiquement par un signal d'horloge SD à basse fréquence de période T. Le signal CB est appliqué à une première entrée de la porte NON-ET, 1150. Une seconde entrée de la porte 1150 reçoit le signal de début de trame DT issu des files de transmission 110. En sortie, la porte NON-ET, 1150 délivre le signal AT.

La valeur P représente un crédit en nombre de blocs d'information qui est alloué au terminal $TE_n$ de manière à ce que celui-ci ne monopolise pas toutes les ressources en débit de l'anneau virtuel. Lorsque le terminal $TE_n$ a épuisé son crédit, le signal CS vient à l'état "1". Le signal CB n'est pris en compte et ne commande la commutation du signal AT de l'état "1" à l'état "0", que lorsque le dernier bloc d'information BI du paquet en cours de transmission a été transmis, c'est-à-dire lorsqu'une transition vers l'état "1" du signal de début de trame DT est détectée.

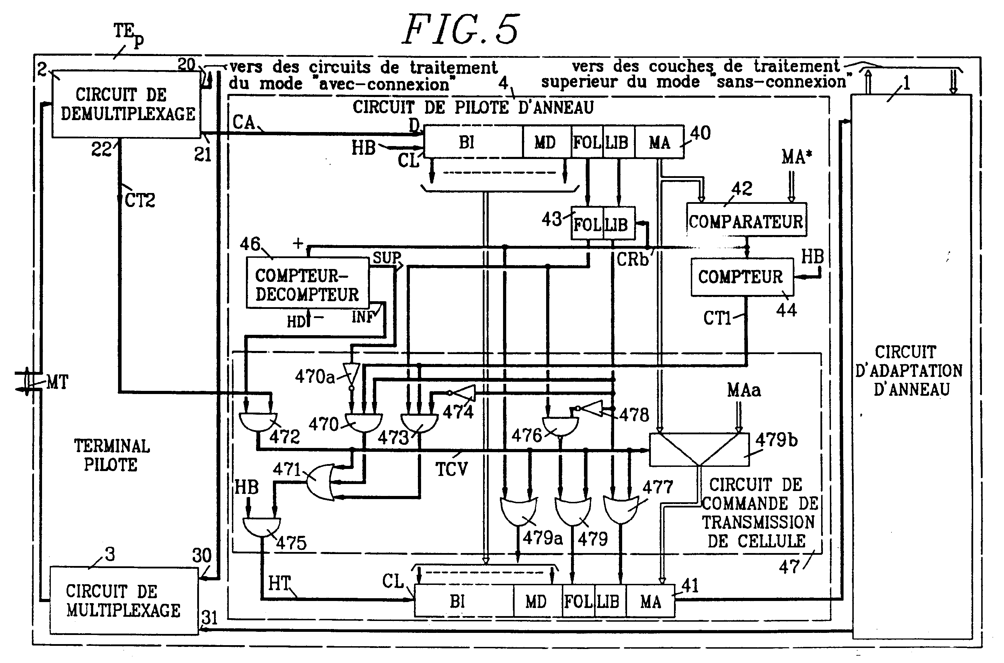

En référence à la Fig. 5, dans le terminal pilote TE$_p$ est prévu un circuit de pilote d'anneau 4 qui est intercalé entre le circuit de démultiplexage 2 et le circuit d'adaptation d'anneau 1 inclus dans le terminal pilote TE$_p$.

Une fonction principale du circuit de pilote d'anneau 4 est de réguler le débit des cellules CA dans l'anneau virtuel en produisant et en éliminant des cellules vides CA, selon les cas de figures. Une autre fonction du circuit de pilote d'anneau 4 est de contrôler les cellules CA convoyées dans l'anneau virtuel afin d'éliminer les cellules de données pleines ayant accompli plus qu'un nombre prédéterminé de tours dans l'anneau virtuel et ainsi afin d'éviter que des cellules altérées CA ne puissent tourner indéfiniment dans l'anneau.

Le circuit de pilote d'anneau 4 comprend essentiellement un registre à décalage d'entrée 40, un registre à décalage de sortie 41, un comparateur de mots 42, un registre tampon 43, un compteur 44, un compteur-décompteur 46, et un circuit de commande de transmission de cellule 47.

Les cellules CA transmises par le circuit de démultiplexage 2 sont reçues à une entrée de données série D du registre à décalage d'entrée 40. Un signal d'horloge de rythme de bit HB est appliqué à une entrée d'horloge CL du registre d'entrée 40.

Les registres à décalage 40 et 41 sont analogues et comprennent chacun M étages de manière à permettre le chargement d'une cellule CA complète. Le registre d'entrée 40 reçoit les cellules CA sous forme série et les délivre sous forme parallèle. Le registre de sortie 41 charge les cellules CA sous forme parallèle et les transmet sous forme série vers le circuit d'adaptation d'anneau 1. Les sorties parallèles du registre d'entrée 40 correspondant aux champs des bloc BI et mot MD sont reliées respectivement à des entrées parallèles correspondantes du registre de sortie 41.

Le comparateur 42 a pour fonction de détecter le chargement d'une cellule CA dans le registre d'entrée 40. Des premières entrées du comparateur, 42 sont reliées à des sorties parallèles du registre d'entrée 40 correspondant au champ du mot d'acheminement MA. Des secondes entrées du comparateur 42 reçoivent la portion de mot d'acheminement MA* commune à tous les mots d'acheminement MA inclus dans les cellules CA de l'anneau virtuel. Le comparateur 42 fournit une impulsion CRb="1" lorsqu'une cellule CA est chargée dans le registre 40.

Le registre tampon 43 qui est de type classique, a pour fonction de mémoriser entre deux réceptions de cellules CA les états de bits FOL et LIB de la dernière cellule CA reçue. Le chargement des états des bits FOL et LIB dans le registre 43 est commandé par l'impulsion CRb.

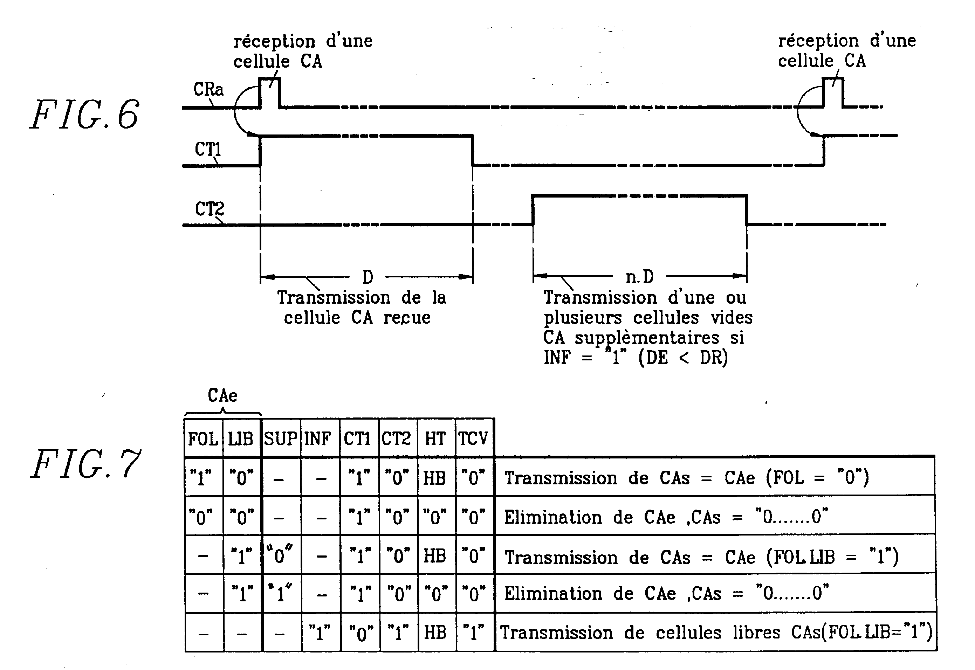

Le compteur 44 est un compteur binaire modulo M. Le compteur 44 fonctionne de manière analogue aux compteurs 104 et 113 montrés à la Fig. 4. Le compteur 44 a pour fonction de produire un signal impulsionnel CT1, montré à la Fig. 6, ayant une durée égale à la durée de transmission notée D d'une cellule CA. Le déblocage et la remise à zéro du compteur 44 sont commandés sur un front montant de l'impulsion CRb="1". Le signal CT1 produit par le compteur 44 est fourni au circuit de commande de transmission de cellule 47.

Le compteur-décompteur 46 a pour fonction de déterminer si le débit effectif DE des cellules dans l'anneau virtuel est supérieur ou inférieur à un débit prédéterminé fixe DR qui est requis dans l'anneau virtuel. A cette fin, des entrées d'horloge d'incrémentation + et de décrémentation - du compteur-décompteur reçoivent respectivement les impulsions CRb="1" et un signal d'horloge de débit HD. Le signal d'horloge de débit HD a une fréquence correspondante au débit requis DR. Le compteur délivre en sortie deux signaux IMF et SUP. Le signal IMF est à l'état actif "1" dans le cas où le débit effectif DE est inférieur au débit requis DR, et alors des cellules vides CA sont à produire. Le signal SUP est à l'état actif "1" dans le cas où le débit effectif DE est supérieur au débit requis DR, et alors des cellules vides CA sont à supprimer.

Le circuit de commande de transmission de cellule 47 comprend plusieurs portes logiques et un multiplexeur 479b.

Le signal SUP est appliqué à une première entrée d'une porte ET, 470, à travers un inverseur 470a. Des seconde et troisième entrées de la porte 470 reçoivent respectivement le signal CT1 et le bit LIB mémorisé dans le registre tampon 43. Une sortie de la porte 470 est connectée à une première entrée d'une première porte OU, 471. Une seconde porte ET, 472 reçoit à des première et seconde entrées le signal INF et un signal CT2, respectivement. Le signal CT2, montré à la Fig. 6, est fourni par une sortie 22 du circuit de démultiplexage 2 et indique à l'état "1" qu'un intervalle temporel libre est disponible pour transmettre éventuellement une cellule libre CA. Une sortie de la porte 472 est reliée à une seconde entrée de la porte OU, 471. A une première entrée, une troisième porte ET, 473 reçoit à travers un inverseur 474 le bit LIB mémorisé dans le registre tampon 43. Des seconde et troisième entrées de la porte 473 reçoivent respectivement le signal CT1 et le bit FOL mémorisé dans le registre tampon 43. Une sortie de la porte 473 est reliée à une troisième entrée de la porte OU, 471. Une sortie de la porte 471 est reliée à une première entrée d'une quatrième porte ET, 475 dont une seconde entrée reçoit le signal d'horloge HB. Une sortie de la porte ET, 475 est connectée à une entrée d'horloge CL du registre de sortie 41 et délivre un signal d'horloge de commande de transmission HT.

Les bits FOL et LIB fournis par le registre tampon 43 sont également appliqués respectivement à des premières entrées d'une première porte NON-ET, 476 et d'une seconde porte OU, 477. Le bit LIB est également appliqué à une seconde entrée de la porte 476 à travers un inverseur 478. Une sortie de la porte 476 est reliée à une première entrée d'une troisième porte OU, 479. Une quatrième porte OU 479a reçoit à une première entrée l'impulsion CRb fournie par le comparateur 42. Des secondes entrées des portes 477, 479 et 479a reçoivent un signal TCV fourni par la porte ET, 472. Le signal TCV est également appliqué à une entrée de commande du multiplexeur 479b. Des sorties des portes OU, 479 et 477 sont reliées respectivement à des entrées parallèles du registre 41 correspondant aux champs des bits FOL et LIB. Une sortie de la porte OU, 479a commande dans le registre de sortie 41 le chargement des informations appliquées aux entrées parallèles du registre 41.

Le multiplexeur 479b a pour fonction de fournir un mot d'acheminement MAa à charger dans le champ correspondant du registre de sortie 41 lorsqu'une cellule vide CA supplémentaire (INF="1") doit être produite et transmise et que le contenu du champ du mot d"acheminement MA dans le registre d'entrée 40 n'est pas valide. Des premières entrées du multiplexeur 479b sont reliées à des sorties parallèles du registre d'entrée 40 correspondant au champ du mot d'acheminement MA. Des secondes entrées du multiplexeur 479b reçoivent le mot d'acheminement MAa. Des sorties du multiplexeur 479b sont reliées à des entrées parallèles du registre de sortie 41 correspondant au champ du mot d'acheminement MA.

Le signal TCV=IMF.CT2 commande à l'état "1" la transmission d'une ou plusieurs, $n \geq 1$, cellules vides CA supplémentaires. Comme cela est apparent à la Fig. 6, la transmission de cellules vides CA supplémentaires intervient entre deux réceptions de cellules CA dans le registre d'entrée 40.

En référence à la Fig. 7, il est considéré une cellule entrante CAe et une cellule sortante CAs et il est montré différents CAs de figure de fonctionnement du circuit de pilote d'anneau 4 en fonction des états des bits FOL et LIB de la cellule entrante CAe et des états des signaux SUP, INF, CT1, CT2, HT et TCV. La notation CAs=CAe(FOL="0") signifie que la cellule sortante transmise CAs est identique à la cellule entrante correspondante CAe excepté le bit FOL qui dans le CAs de la cellule CAs est à l'état "0". La notation CAs=CAe(FOL.LIB="1") indique que pour la cellule sortante les bits FOL et LIB sont tous les deux à l'état "1". La notation CAs="0...0" signifie qu'il est transmis une suite d'état "0" en réponse à l'entrée de la cellule CAe et donc que la cellule CAe est éliminée. Le symbole "-" dans les cases de la table montrée à la Fig. 7 indique que l'état du signal ou bit correspondant est quelconque.

## Revendications

1. Système de communication pour équiper un réseau temporel asynchrone (RA) et permettre à des terminaux de communiquer en mode sans-connexion à travers ledit réseau (RA), caractérisé en ce que le système comprend des moyens (GA, 1, 2, 3, 4) pour gérer l'établissement et l'exploitation d'un anneau virtuel de communication auquel sont connectés les terminaux (TE$_n$) susceptibles de communiquer entre eux en mode sans-connexion et à travers lequel sont transmises des premières cellules de données (CA) contenant des blocs d'information (BI) à transmettre, lesdits moyens pour gérer incluant des moyens (GA) reliés à travers le réseau (RA) à chacun des terminaux (TE) pour contrôler des demandes de connexion/déconnexion émanant des terminaux (TE) afin de fournir aux terminaux connectés à l'anneau (TE$_n$) des informations (MA) relatives à l'acheminement des cellules, et des moyens (1, 2, 3, 4) répartis dans les terminaux (TE) et interfaçant les terminaux (TE) à l'anneau virtuel pour gérer la production, la réception et la transmission des premières cellules de données (CA).

2. Système de communication conforme à la revendication 1, caractérisé en ce que lesdites cellules de données (CA) ont une longueur fixe (M) et sont transmises dans l'anneau virtuel selon un unique sens de transmission.

3. Système de communication conforme à la revendication 1 ou 2, caractérisé en ce que les moyens répartis dans les terminaux (TE) comprennent dans chacun desdits terminaux (TE), des moyens de démultiplexage et multiplexage (2, 3) pour séparer les premières cellules de données de l'anneau virtuel (CA) et des secondes cellules de données (PA) n'appartenant pas à l'anneau virtuel et convoyées par des mêmes multiplex temporels asynchrones (MT) du réseau (RA), des moyens (100 à 104, 103a) pour détecter et recevoir les premières cellules de données destinées au terminal (TE), des moyens (105) pour lire et mémoriser par ordre chronologique d'arrivée des blocs d'information (BI) et des adresses de source (AS) lus dans les premières cellules de données reçues (CA), des moyens (100, 114) pour retransmettre dans l'anneau virtuel les premières cellules de données pleines destinées à d'autres terminaux, et des moyens (11) pour inclure des blocs d'information (BI) à transmettre et des adresses (MD) dans des premières cellules de données vides afin de transmettre des premières cellules (CA) avec lesdits blocs et adresses (MD) dans l'anneau virtuel.

4. Système de communication conforme à la revendication 3, caractérisé en ce que les moyens pour inclure (11) comprennent des moyens (115, 1150) pour réguler le débit transmis par le terminal en fixant une limite supérieure au nombre de premières cellules de données pleines (CA) transmissibles par unité de temps par ledit terminal.

5. Système conforme à l'une quelconque des revendications 1 à 4, caractérisé en ce que les moyens répartis dans les terminaux et interfaçant ces terminaux comprennent également des moyens (4) pour réguler le débit des premières cellules de données dans l'anneau virtuel en produisant et éliminant des premières cellules de données vides respectivement en fonction du résultat d'une mesure du débit dans l'anneau, et des moyens (4) pour contrôler les premières cellules de données convoyées dans l'anneau virtuel afin d'éliminer les premières cellules de données pleines ayant accompli plus qu'un nombre prédéterminé de tours dans l'anneau virtuel.

## Patentansprüche

1. Kommunikationssystem, mit dem ein asynchrones zeitweiliges Netz (RA) versehen wird und das die Kommunikation zwischen Endgeräten über dieses Netz (RA) im verbindungslosen Modus ermöglicht, dadurch gekennzeichnet, daß das System Mittel (GA, 1, 2, 3, 4) umfaßt zur Steuerung der Erstellung und Nutzung eines virtuellen Kommunikationsringes, mit dem die Endgeräte ($TE_n$) verbunden sind, die zur Kommunikation untereinander im verbindungslosen Modus imstande sind, und über den erste Datenzellen (CA) übertragen werden, die zu übertragende Informationsblöcke (BI) enthalten, wobei die Steuermittel Mittel (GA) enthalten, die über das Netz (RA) mit jedem der Endgeräte (TE) verbunden sind, um die Anfragen zur Verbindung/Trennung zu steuern, die von den Endgeräten (TE) ausgehen, um den mit dem Ring verbundenen Endgeräten (TE) Informationen (MA) bezüglich der Wegewahl für die Zellen zu liefern, sowie Mittel (1, 2, 3, 4), die in den Endgeräten (TE) verteilt sind und die Endgeräte (TE) an den virtuellen Ring anschließen, um die Erzeugung, den Empfang und die Übertragung der ersten Datenzellen (CA) zu steuern.

2. Kommunikationssystem nach Anspruch 1, dadurch gekennzeichnet, daß die Datenzellen (CA) eine bestimmte Länge (M) aufweisen und im virtuellen Ring in eine einzige Übertragungsrichtung übertragen werden.

3. Kommunikationssystem nach Anspruch 1 oder 2, dadurch gekennzeichnet, daß die in den Endgeräten (TE) verteilten Mittel in jedem dieser Endgeräte (TE) Demultiplexer- und Multiplexermittel (2, 3) umfassen zur Trennung der ersten Datenzellen des virtuellen Rings (CA) und zweiten Datenzellen (PA), die nicht zu dem virtuellen Ring gehören und von denselben asynchronen zeitweiligen Multiplexern (MT) des Netzes (RA) geleitet werden, sowie Mittel (100 bis 104, 103a) für den Nachweis und Empfang der ersten, für das Endgerät (TE) bestimmten Datenzellen, Mittel (105) zum Auslesen und Speichern der Informationsblöcke (BI) und Quellenadressen (AS), die in den empfangenen ersten Datenzellen (CA) ausgelesen werden, in chronologischer Reihenfolge ihrer Ankunft, Mittel (100, 114) zur Übermittlung im virtuellen Ring der vollen ersten Datenzellen, die für andere Endgeräte bestimmt sind, und. Mittel (11) zum Einfügen der zu übertragenden Informationsblöcke (BI) und Adressen (MD) in die leeren ersten Datenzellen, um die ersten Zellen (CA) mit den Blöcken und Adressen (MD) im virtuellen Ring zu übertragen.

4. Kommunikationssystem nach Anspruch 3, dadurch gekennzeichnet, daß die Mittel zum Einfügen (11) Mittel (115, 1150) zur Regulierung des vom Endgerät übertragenen Durchsatzes umfassen, wobei ein oberer Grenzwert für die Anzahl der pro Zeiteinheit von dem Endgerät übertragbaren ersten vollen Datenzellen (CA) festgelegt wird.

5. System nach einem der Ansprüche 1 bis 4, dadurch gekennzeichnet, daß die in den Endgeräten verteilten und an diese Endgeräte angeschlossenen Mittel auch Mittel (4) zur Regulierung des Durchsatzes der ersten Datenzellen im virtuellen Ring umfassen, wobei leere erste Datenzellen abhängig vom Ergebnis einer Durchsatzmessung im Ring erzeugt beziehungsweise ausgeschieden werden, sowie Mittel (4) zur Steuerung der ersten Datenzellen, die im virtuellen Ring geleitet werden, um die vollen ersten Datenzellen auszuscheiden, die mehr als eine bestimmte Anzahl von Umläufen im virtuellen Ring durchgeführt haben.

## Claims

1. Communication system to equip an asynchronous time-division network (RA) and to enable terminals to communicate in no-connection mode via said network (RA), characterized in that the system comprises means (GA, 1, 2, 3, 4) for managing the setting up and the operating of a virtual communication ring to which are connected the terminals ($TE_n$) likely to communicate with one another in no-connection mode and via which are transmitted first data cells (CA) containing blocks of information (BI) to be transmitted, said managing means including means (GA) connected via the network (RA) to each of the terminals (TE) for controlling connection/disconnection requests issuing from the terminals (TE) thereby supplying information (MA) relating to the routing of the cells to the terminals ($TE_n$) connected to the ring and means (1, 2, 3, 4) distributed in the terminals (TE) and interfacing the terminals (TE) with the virtual ring for managing the production, the reception and the transmission of the first data cells (CA).

2. Communication system according to claim 1, characterized in that said data cells (CA) have a set length (M) and are transmitted in the virtual ring according to a single transmission direction.

3. Communication system according to claim 1 or 2, characterized in that the means distributed in the terminals (TE) comprise in each of said terminals (TE), demultiplexing and multiplexing means (2, 3) for separating the first data cells (CA) of the virtual ring and second data cells (PA) not belonging to the virtual ring and carried by same asynchronous time-division multiplex ways (MT) of the network (RA), means (100 to 104, 103a) for detecting and receiving the first data cells destined for the terminal (TE), means (105) for reading and memorizing in chronological order of arrival blocks of information (BI) and source addresses (AS) read in the first data cells (CA) received, means (100, 114) for retransmitting in the virtual ring the filled first data cells destined for other terminals, and means (11) for including blocks of information (BI) to be transmitted and addresses (MD) in unfilled first data cells thereby transmitting first cells (CA) with said blocks and addresses (MD) in the virtual ring.

4. Communication system according to claim 3, characterized in that the including means (11) comprise means (115, 1150) for regulating the rate transmitted by the terminal by setting an upper limit to the number of filled first data cells (CA) transmissible per unit of time by said terminal.

5. System according to any one of claims 1 to 4, characterized in that the means distributed in the terminals and interfacing these terminals further comprise means (4) for regulating the rate of first data cells in the virtual ring by producing and eliminating unfilled first data cells as a function of the result of a measurement of the rate in the ring, and means (4) for controlling the first data cells carried in the virtual ring thereby eliminating the filled first data cells having performed more than a predetermined number of laps in the virtual ring.

## FIG.1

## FIG.2

## FIG.3

FIG. 4

11

FIG.5

FIG.6

réception d'une
cellule CA

CRa

réception d'une
cellule CA

CT1

CT2

D

Transmission de la
cellule CA reçue

n.D

Transmission d'une ou
plusieurs cellules vides
CA supplèmentaires si
INF = "1" (DE < DR)

FIG.7

| CAe | | | | | | | | |
|------|------|------|------|------|------|------|------|---|
| FOL | LIB | SUP | INF | CT1 | CT2 | HT | TCV | |
| "1" | "0" | – | – | "1" | "0" | HB | "0" | Transmission de CAs = CAe (FOL = "0") |
| "0" | "0" | – | – | "1" | "0" | "0" | "0" | Elimination de CAe ,CAs = "0.......0" |
| – | "1" | "0" | – | "1" | "0" | HB | "0" | Transmission de CAs = CAe (FOL LIB = "1") |
| – | "1" | "1" | – | "1" | "0" | "0" | "0" | Elimination de CAe ,CAs = "0.......0" |
| – | – | – | "1" | "0" | "1" | HB | "1" | Transmission de cellules libres CAs(FOL LIB="1") |

EP 0 406 077 B1